# EUROPÄISCHE PATENTANMELDUNG

(11) **EP 1 887 394 A1**
(43) Veröffentlichungstag der Anmeldung: **13.02.2008**
(21) Anmeldenummer: 07014630.3
(22) Anmeldetag: 26.07.2007
(51) Int. Cl.: G02B 6/36, G02B 6/44

(54) **Abfangvorrichtung für Lichtwellenleiter führende Elemente**

(30) Priorität: 08.08.2006 DE 202006012234 U
(71) Anmelder: CCS Technology, Inc., Wilmington, DE 19803 (US)
(72) Erfinder: Syplacz, Roman, 58099 Hagen (DE)
(74) Vertreter: Sturm, Christoph

(57) **Zusammenfassung**

Die Erfindung betrifft eine Abfangvorrichtung für Lichtwellenleiter führende Elemente, insbesondere für Lichtwellenleiterkabel oder Lichtwellenleiterbündeladern oder Mikrokabel führende Mikroducts, mit mehreren Führungskanälen (25) für Lichtwellenleiter führende Elemente, wobei jeder Führungskanal (25) der Führung und Abfangung jeweils mindestens eines Lichtwellenleiter führendes Elements dient, und wobei jeder Führungskanal (25) in Längsrichtung desselben bzw. in Längsrichtung eines abzufangenden Elements gesehen wellenartig konturiert ist.

## Beschreibung

Die Erfindung betrifft eine Abfangvorrichtung für Lichtwellenleiter führende Elemente, insbesondere für Lichtwellenleiterkabel oder Lichtwellenleiterbündeladern oder Mikrokabel führende Mikroducts.

Beim Aufbau von Lichtwellenleiterkabeinetzen ist es erforderlich, sogenannte Verbindungsstellen bzw. Abzweigstellen für Lichtwellenleiter vorzusehen, wobei an den Verbindungsstellen bzw. Abzweigstellen Spleiße zwischen Lichtwellenleitern ausgebildet werden. Zum Schutz der Spleißverbindungen an den Verbindungsstellen bzw. Abzweigstellen werden die Spleißverbindungen in Spleißkassetten von Kabelmuffen oder Verteilereinrichtungen abgelegt.

Lichtwellenleiter führende Elemente, wie zum Beispiel Lichtwellenleiterkabel oder Lichtwellenleiterbündeladern oder Mikrokabel führende Mikroducts, werden außerhalb bzw. innerhalb der Kabelmuffen oder Verteilereinrichtungen gegenüber einer Zugbeanspruchung sowie gegebenenfalls auch Torsionsbeanspruchung und Biegebeanspruchung abgefangen, wobei hierzu spezielle Abfangvorrichtungen dienen. Die hier vorliegende Erfindung betrifft eine neuartige Abfangvorrichtung zur Abfangung von Lichtwellenleiter führenden Elementen innerhalb eines von einer Kabelmuffe oder einer Verteilereinrichtung begrenzten Innenraums.

Der hier vorliegenden Erfindung liegt das Problem zu Grunde, eine neuartige Abfangvorrichtung für Lichtwellenleiter führende Elemente zu schaffen. Dieses Problem wird durch eine Abfangvorrichtung gemäß Anspruch 1 gelöst.

Die erfindungsgemäße Abfangvorrichtung weist mehrere Führungskanäle für Lichtwellenleiter führende Elemente auf, wobei jeder Führungskanal der Führung und Abfangung jeweils mindestens eines Lichtwellenleiter führendes Elements dient, und wobei jeder Führungskanal in Längsrichtung desselben bzw. in Längsrichtung eines abzufangenden Elements gesehen wellenartig konturiert ist.

Die hier vorliegende Erfindung stellt ein völlig neues Konzept einer Abfangvorrichtung für Lichtwellenleiter führende Elemente bereit. Die erfindungsgemäße Abfangvorrichtung ist konstruktiv einfach und benötigt nur einen geringen Raumbedarf bei der Anordnung derselben in einer Kabelmuffe bzw. einer Verteilereinrichtung. Abzufangende, Lichtwellenleiter führende Elemente werden besonders schonend gehandhabt, so dass die Übertragungseigenschaften der Lichtwellenleiter durch die Abfangvorrichtung nicht beeinträchtigt werden.

Vorzugsweise ist jeder Führungskanal in Längsrichtung desselben bzw. in Längsrichtung eines abzufangenden Elements gesehen derart wellenartig konturiert, dass ein Innenmaß der Führungskanäle entlang der Längsrichtung derselben in etwa unverändert bleibt.

Nach einer ersten vorteilhaften Weiterbildung der Erfindung umfasst die erfindungsgemäße Abfangvorrichtung ein Unterteil mit einem plattenförmigen Basiselement und mehreren an einer Seite des Basiselements vorstehenden Trennwänden, wobei jeweils zwei benachbarte Trennwände jeweils einen Führungskanal begrenzen, und wobei die Trennwände in Längsrichtung des jeweiligen Führungskanals bzw. in Längsrichtung eines abzufangenden Elements gesehen zur Bereitstellung der gewellten Kontur mehrere voneinander beabstandete Vorsprünge aufweisen. Eine solche Abfangvorrichtung eignet sich insbesondere zur Abfangung von Lichtwellenleiterbündeladern oder Mikrokabeln sowie Mikroducts.

Nach einer zweiten, alternativen vorteilhaften Weiterbildung der Erfindung umfasst die erfindungsgemäße Abfangvorrichtung mehrere plattenförmige Basiskörper, wobei in jeden Basiskörper mehrere Durchführungen derart eingebracht sind, dass dann, wenn mehrere Basiskörper deckungsgleich hintereinander positioniert sind, die Durchführungen derselben nicht deckungsgleich zueinander ausgerichtet sind, sodass die Durchführungen die Führungskanäle mit der gewellten Kontur bilden. Eine solche Abfangvorrichtung eignet sich insbesondere zur Abfangung von Lichtwellenleiterkabeln oder Mikroducts.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: eine perspektivische Explosionsansicht einer Abfangvorrichtung für Lichtwellenleiter führende Elemente nach einem ersten Ausführungsbeispiel der Erfindung;
- Fig. 2:: ein Unterteil der Abfangvorrichtung der Fig. 1;
- Fig. 3:: ein Deckelteil der Abfangvorrichtung der Fig. 1;
- Fig. 4:: eine perspektivische Ansicht einer Abfangvorrichtung für Lichtwellenleiter führende Elemente nach einem zweiten Ausführungsbeispiel der Erfindung;
- Fig. 5:: eine Vorderansicht der Abfangvorrichtung der Fig. 4;
- Fig. 6:: eine Seitenansicht der Abfangvorrichtung der Fig. 4;
- Fig. 7:: eine Draufsicht der Abfangvorrichtung der Fig. 4;
- Fig. 8:: ein erstes plattenförmiges Element der Abfangvorrichtung der Fig. 4;
- Fig. 9:: ein zweites plattenförmiges Element der Abfangvorrichtung der Fig. 4; und
- Fig. 10:: die Abfangvorrichtung der Fig. 4 zusammen mit einer Halbschale einer Kabelmuffe und zusammen mit abgefangenen, Lichtwellenleiter führenden Elementen.

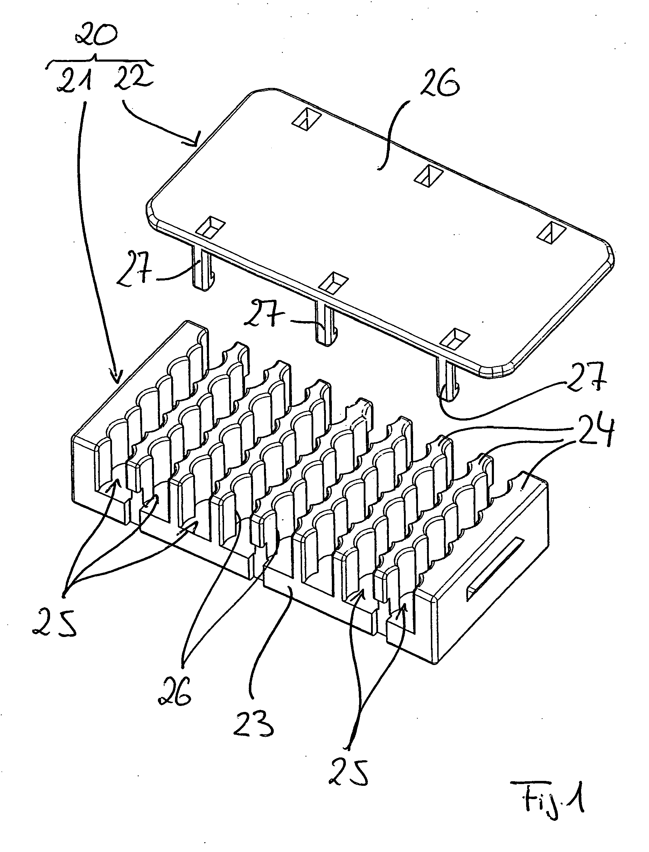

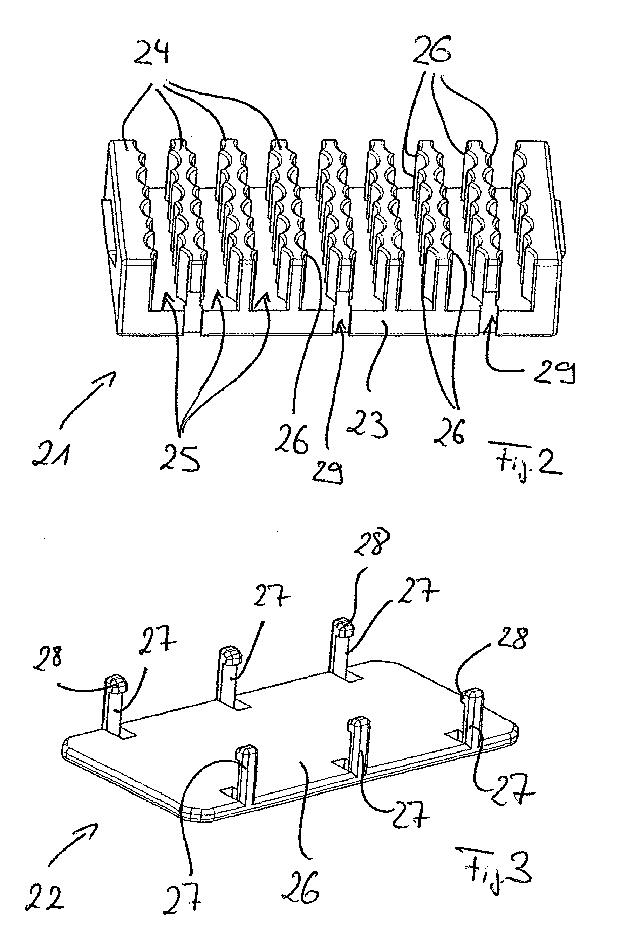

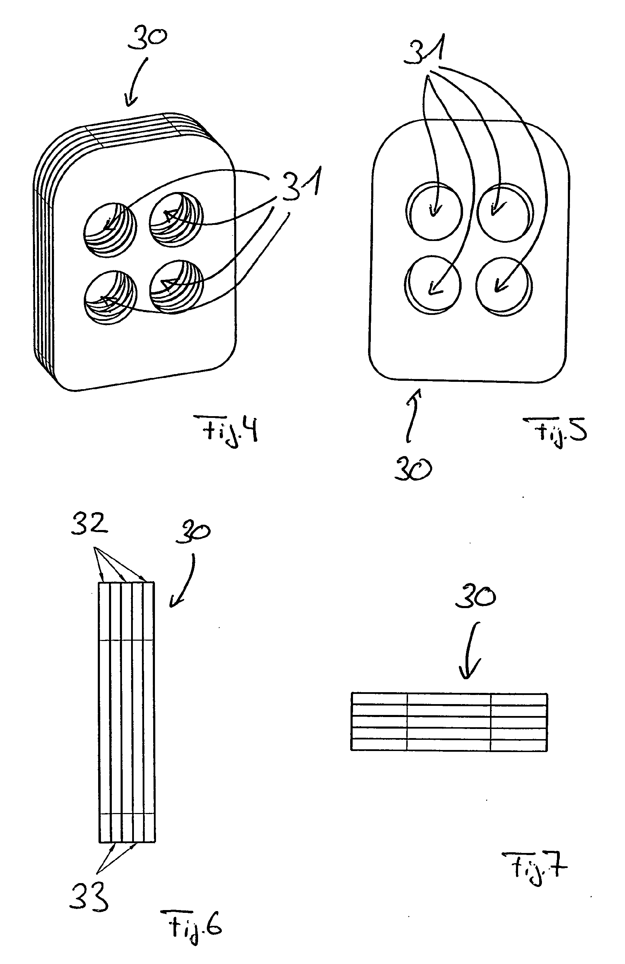

Ein erstes Ausführungsbeispiel einer erfindungsgemäßen Abfangvorrichtung 20 für Lichtwellenleiter führende Elemente zeigen Fig. 1 bis 3, wobei die Abfangvorrichtung 20 der Fig. 1 bis 3 ein Unterteil 21 sowie ein Deckelteil 22 umfasst.

Das Unterteil 21 der Abfangvorrichtung 20 der Fig. 1 bis 3 verfügt über ein plattenförmiges Basiselement 23, wobei an einer Seite des plattenförmigen Basiselements 23 mehrere in etwa parallel zueinander verlaufende Trennwände 24 vorstehen. Im gezeigten Ausführungsbeispiel stehen vom plattenförmigen Basiselement 23 insgesamt neun Trennwände 24 vor. Jeweils zwei benachbarte Trennwände 24 definieren einen Führungskanal 25 zur Führung und Abfangung von Lichtwellenleiter führenden Elementen, so dass im gezeigten Ausführungsbeispiel die Abfangvorrichtung 20 insgesamt acht derartige Führungskanäle 25 aufweist.

Die Führungskanäle 25 sind in Längsrichtung derselben bzw. in Längsrichtung eines abzufangenden, Lichtwellenleiter führenden Elements gesehen wellenartig konturiert, derart, dass ein Innenmaß der Führungskanäle 25, welches zur Führung der die Lichtwellenleiter führenden Elemente innerhalb der Führungskanäle 25 zur Verfügung steht, in etwa unverändert bleibt. Im Ausführungsbeispiel der Fig. 1 bis 3 wird dieses Innenmaß durch den Abstand zweier benachbarter Trennwände 24 bestimmt.

Zur Bereitstellung dieser wellenartigen Konturierung der Trennwände 24 weisen im Ausführungsbeispiel der Fig. 1 bis 3 die Trennwände 24 in Längsrichtung derselben gesehen mehrere voneinander beabstandete Vorsprünge 26 auf. Im gezeigten Ausführungsbeispiel der Fig. 1 bis 3 sind diese Vorsprünge 26 scharfkantig ausgeführt. Die Vorsprünge 26 benachbarter, einen Führungskanal 25 begrenzender Trennwände 24 sind dabei derart zueinander versetzt, dass Vorsprünge 26 einer Trennwand 24 in etwa in der Mitte zwischen den Vorsprüngen 26 der benachbarten Trennwand 24 im Bereich eines Rücksprungs derselben liegen.

Hierdurch bleibt das Innenmaß der Führungskanäle 25 über die axiale Erstreckung derselben in etwa unverändert. In axialer Projektion gesehen verengt sich jedoch das effektive Innenmaß der Führungskanäle mehrfach, und zwar derart, dass in der axialen Projektion das effektive Innenmaß der Führungskanäle 25 kleiner ist als ein Außendurchmesser eines abzufangenden, Lichtwellenleiter führenden Elements. Hierdurch werden Lichtwellenleiter führende Elemente in den Führungskanälen 25 geklemmt und so gegenüber einer Zugbelastung sowie Schubbelastung abgefangen.

Im gezeigten Ausführungsbeispiel der Fig. 1 bis 3 können in jedem Führungskanal 25 übereinander zwei Elemente, die Lichtwellenleiter führen, abgefangen werden. Insgesamt können demnach in der Abfangvorrichtung 20 insgesamt sechzehn Lichtwellenleiter führende Elemente geführt und abgefangen werden, wobei es sich bei diesen Elementen vorzugsweise um Lichtwellenleiterbündeladern, Mikrokabel, Mikroducts, Patchcords oder auch Pigtails handelt.

Mit dem Unterteil 21 der Abfangvorrichtung 20 des Ausführungsbeispiels der Fig. 1 bis 3 wirkt das Deckelteil 22 zusammen, wobei das Deckelteil 22 die Führungskanäle 25 an einer dem Basiselement 23 des Unterteils 21 gegenüberliegenden Seite abschließt. Das Deckelteil 22 verfügt über ein plattenförmiges Basiselement 26 sowie an einer Seite des Basiselements 26 vorstehende Verriegelungselemente 27, über die das Deckelteil 22 mit dem Unterteil 21 verrastet bzw. verriegelt werden kann.

Im gezeigten Ausführungsbeispiel wirken zur Verriegelung des Deckelteils 22 mit dem Unterteil 21 Vorsprünge 28 der Verriegelungselemente 27 mit entsprechenden Aussparungen 28 im Bereich von Trennwänden 24 zusammen, wobei zur Verrastung des Deckelteils 22 mit dem Unterteil 21 die Vorsprünge 28 der Verriegelungselemente 27 in die Aussparungen 29 im Bereich der Trennwände 24 einschnappen.

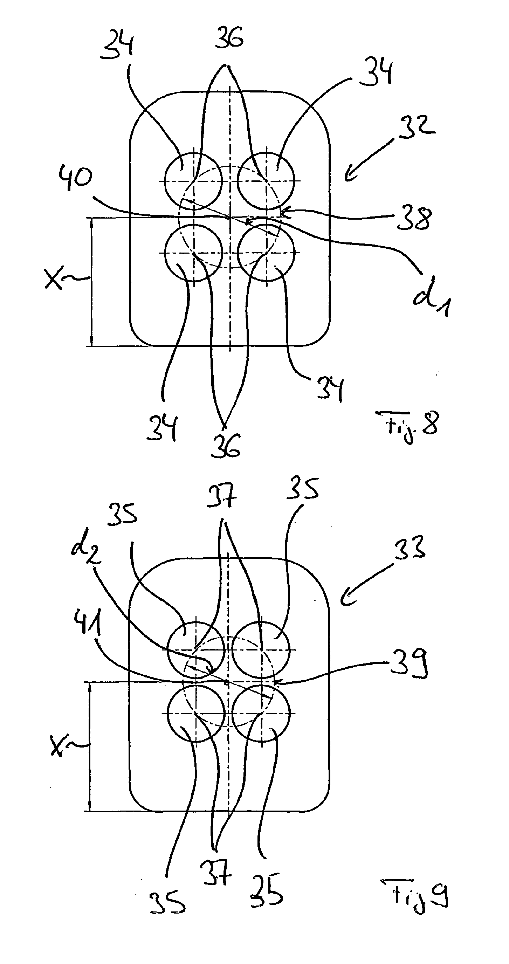

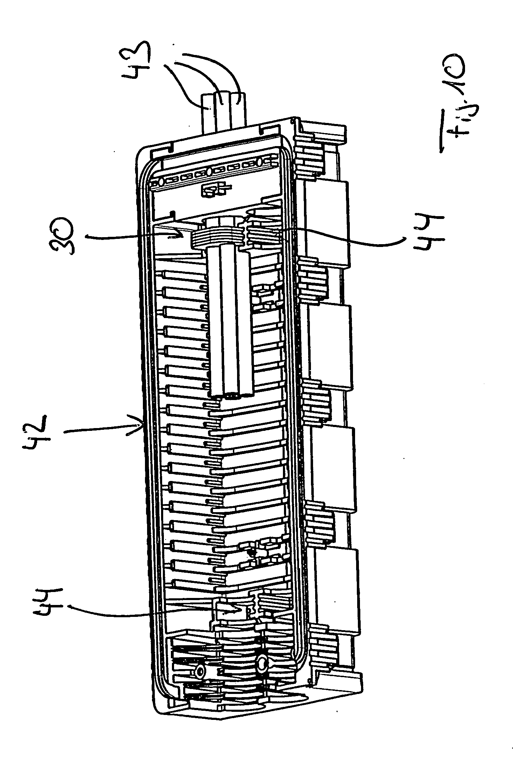

Ein zweites Ausführungsbeispiel einer erfindungsgemäßen Abfangvorrichtung 30 für Lichtwellenleiter führende Elemente zeigen Fig. 4 bis 10. So verfügt auch die Abfangvorrichtung 30 des Ausführungsbeispiels der Fig. 4 bis 10 über mehrere Führungskanäle 31 für Lichtwellenleiter führende Elemente, wobei im gezeigten Ausführungsbeispiel die Abfangvorrichtung 30 insgesamt vier Führungskanäle 31 umfasst.

Die Führungskanäle 31 der Abfangvorrichtung 30 des Ausführungsbeispiels der Fig. 4 bis 10 sind ebenso wie die Führungskanäle 25 der Abfangvorrichtung 20 des Ausführungsbeispiels der Fig. 1 bis 3 wellenartig konturiert, und zwar derart, dass ein Innenmaß der Führungskanäle 31 in etwa unverändert bleibt, wobei im Ausführungsbeispiel der Fig. 4 bis 10 das Innenmaß der Führungskanäle 31 durch den Durchmesser von die Führungskanäle 31 definierenden Durchführungen bestimmt wird.

Im Ausführungsbeispiel der Fig. 4 bis 10 umfasst die erfindungsgemäße Abfangvorrichtung mehrere plattenförmige Basiskörper, nämlich erste plattenförmige Basiskörper 32 gemäß Fig. 8 und zweite plattenförmige Basiskörper 33 gemäß Fig. 9, wobei gemäß Fig. 6 die Basiskörper 32, 33 derart hintereinander angeordnet sind, dass zwischen zwei ersten Basiskörpern 32 jeweils ein zweiter Basiskörper 33 angeordnet ist.

In jeden der Basiskörper 32, 33 sind im gezeigten Ausführungsbeispiel mehrere Durchführungen 34 bzw. 35 eingebracht. Dann, wenn die Basiskörper 32, 33 wechselweise deckungsgleich hintereinander positioniert sind, sind die entsprechenden Durchführungen 34, 35 der Basiskörper 32, 33 nicht deckungsgleich, sondern vielmehr zueinander versetzt, so dass die Durchführungen 34, 35 die Führungskanäle 31 mit der gewellten Kontur bilden. Hierdurch wird in der axialen Projektion das effektive Innenmaß der Führungskanäle 31 eingeengt, und zwar derart, dass in der axialen Projektion das effektive Innenmaß der Führungskanäle 31 abschnittsweise geringer ist als ein Außendurchmesser eines abzufangenden, Lichtwellenleiter führenden Elements.

Hierdurch können Lichtwellenleiter führende Elemente wiederum in den Führungskanälen geklemmt und so gegenüber einer Zugbeanspruchung sowie Schubbeanspruchung abgefangen werden.

Wie Fig. 8 und 9 entnommen werden kann, sind im bevorzugten Ausführungsbeispiel die Durchführungen 34, 35 derart in die plattenförmigen Basiskörper 32, 33 eingebracht, dass Mittelpunkte 36, 37 der Durchführungen 34, 35 mit gleicher Winkelteilung bzw. winkelidentisch auf einer Kreisbahn 38 bzw. 39 liegen, wobei die Durchführungen 34, 35 gleiche Durchmesser aufweisen. Mittelpunkte 40, 41 der Kreisbahnen 38, 39 sind an identischen Positionen (siehe Abstand X in Fig. 8, 9) in die entsprechenden plattenförmigen Basiskörper 32 bzw. 33 eingebracht, die Durchmesser d1, d2 dieser Kreisbahnen 38, 39 weichen jedoch voneinander ab.

Durch das oben beschriebene Einbringen der Durchführungen 34, 35 in die plattenförmigen Basiskörper 32, 33 wird erreicht, dass dann, wenn die Basiskörper deckungsgleich hintereinander angeordnet sind, die Mittelpunkte 36, 37 der Durchführungen 34, 35 zueinander versetzt sind. Weisen die Durchführungen 34, 35 insbesondere identische Durchmesser auf, so wird hierdurch in der axialen Projektion das effektive Innenmaß der über die Durchführungen 34, 35 definierten Führungskanäle 31 abschnittsweise verengt. Die Abfangvorrichtung 30 des Ausführungsbeispiels der Fig. 4 bis 10 dienen vorzugsweise der Abfangung von Mikrokabeln bzw. von Mikroducts, in welchen Mikrokabel verlaufen.

In Abweichung zum Ausführungsbeispiel der Fig. 4 bis 10 ist es auch möglich, dass die Durchmesser d1, d2 der Kreisbahnen identisch sind, dass jedoch die Durchführungen derart in die plattenförmigen Basiskörper eingebracht sind, dass die Mittelpunkte der Durchführungen mit unterschiedlicher Winkelteilung bzw. winkelversetzt auf den Kreisbahnen liegen. Auch hierdurch wird erreicht, dass dann, wenn Basiskörper deckungsgleich hintereinander angeordnet sind, die Mittelpunkte der Durchführungen zueinander versetzt sind.

Die Durchführungen 34, 35 können als kreisförmige oder auch ovale Bohrungen bzw. Ausstanzungen ausgebildet sein. Dabei können die Durchführungen 34, 35 glatte oder auch profilierte Innenflächen aufweisen, wobei profilierte Innenfläche die Abfangwirkung erhöhen.

Fig. 10 zeigt eine erfindungsgemäße Abfangvorrichtung 30 zusammen mit einer Halbschale 42 einer Kabelmuffe sowie zusammen mit in der Abfangvorrichtung 30 abgefangenen Mikroducts 43. In der Abfangvorrichtung 30 gemäß Fig. 4 bis 10 können demnach insgesamt vier Mikroducts 43 abgefangen werden, wobei jeder Führungskanal 31 der Abfangung eines Mikroducts 43 dient. Die plattenförmigen Basiskörper 32, 33 der Abfangvorrichtung 30 finden in entsprechend konturierten Ausnehmungen 44 der Halbschale 42 Aufnahme.

Beiden Ausführungsbeispielen ist demnach gemeinsam, dass die Abfangvorrichtungen 20 bzw. 30 mehrere Führungskanäle 25 bzw. 31 aufweisen, die in Längsrichtung derselben derart wellenartig konturiert sind, dass ein Innenmaß der Führungskanäle 25 bzw. 31 entlang der Längsrichtung derselben in etwa unverändert bleibt. Über die gewellte Konturierung wird jedoch in axialer Projektion ein effektives Innenmaß der Führungskanäle 25 bzw. 31 eingeengt, wobei in der axialen Projektion das effektive Innenmaß kleiner ist als ein Außendurchmesser eines in der Abfangvorrichtung 20 bzw. 30 abzufangenden, Lichtwellenleiter führenden Elements. Hierdurch kann eine schonende Zugabfangung sowie Schubabfangung für Lichtwellenleiter führende Elemente etabliert werden.

An dieser Stelle sei darauf hingewiesen, dass die Führungskanäle 25 bzw. 31 vorzugsweise derart wellenförmig konturiert sind, dass sich in der axialen Projektion das effektive Innenmaß der Führungskanäle 25 bzw. 31 zwischen 5 % und 25 % bezogen auf den Abstand der Trennwände 24 bzw. den Durchmesser der Durchführungen 34, 35 einengt.

### Bezugszeichenliste

- 20: Abfangvorrichtung
- 21: Unterteil
- 22: Deckelteil
- 23: Basiselement
- 24: Trennwand
- 25: Führungskanal
- 26: Basiselement
- 27: Verriegelungselement
- 28: Vorsprung
- 29: Ausnehmung
- 30: Abfangvorrichtung
- 31: Führungskanäle
- 32: Basiskörper
- 33: Basiskörper
- 34: Durchführung
- 35: Durchführung
- 36: Mittelpunkt
- 37: Mittelpunkt
- 38: Kreisbahn
- 39: Kreisbahn
- 40: Mittelpunkt
- 41: Mittelpunkt
- 42: Halbschale
- 43: Mikroduct
- 44: Ausnehmung

## Patentansprüche

1. Abfangvorrichtung für Lichtwellenleiter führende Elemente, insbesondere für Lichtwellenleiterkabel oder Lichtwellenleiterbündeladern oder Mikrokabel führende Mikroducts, mit mehreren Führungskanälen (25; 31) für Lichtwellenleiter führende Elemente, wobei jeder Führungskanal (25; 31) der Führung und Abfangung jeweils mindestens eines Lichtwellenleiter führendes Elements dient, und wobei jeder Führungskanal (25; 31) in Längsrichtung desselben bzw. in Längsrichtung eines abzufangenden Elements gesehen wellenartig konturiert ist.

2. Abfangvorrichtung nach Anspruch 1, **dadurch gekennzeichnet, dass** jeder Führungskanal (25; 31) in Längsrichtung desselben bzw. in Längsrichtung eines abzufangenden Elements gesehen derart wellenartig konturiert ist, dass ein Innenmaß der Führungskanäle (25; 31) entlang der Längsrichtung derselben in etwa unverändert bleibt.

3. Abfangvorrichtung nach Anspruch 1 oder 2, **gekennzeichnet durch** ein Unterteil (21) mit einem plattenförmigen Basiselement (23) und mehreren an einer Seite des Basiselements (23) vorstehenden Trennwänden (24), wobei jeweils zwei benachbarte Trennwände (24) jeweils einen Führungskanal (25) begrenzen, und wobei die Trennwände (24) in Längsrichtung des jeweiligen Führungskanals (25) bzw. in Längsrichtung eines abzufangenden Elements gesehen zur Bereitstellung der gewellten Kontur mehrere voneinander beabstandete Vorsprünge (26) aufweisen.

4. Abfangvorrichtung nach Anspruch 3, **dadurch gekennzeichnet, dass** die Vorsprünge (26) benachbarter, einen Führungskanal (25) begrenzender Trennwände (24) derart zueinander versetzt sind, dass Vorsprünge einer Trennwand in etwa in der Mitte zwischen den Vorsprüngen der benachbarten Trennwand im Bereich eines Rücksprungs derselben liegen.

5. Abfangvorrichtung nach einem oder mehreren der Ansprüche 2 bis 4, **dadurch gekennzeichnet, dass** jeder Führungskanal (25) der Führung und Abfangung von mehreren, insbesondere von zwei, Lichtwellenleiter führenden Elementen dient, die im jeweiligen Führungskanal (25) übereinander positionierbar sind.

6. Abfangvorrichtung nach einem oder mehreren der Ansprüche 2 bis 5, **gekennzeichnet durch** ein mit dem Unterteil (21) verrastbares Deckelteil (22), welches die Führungskanäle (25) an einer dem Basiselement (23) gegenüberliegenden Seite abschließt.

7. Abfangvorrichtung nach Anspruch 1, **gekennzeichnet durch** mehrere plattenförmige Basiskörper (32, 33), wobei in jeden Basiskörper (32, 33) mehrere Durchführungen (34, 35) derart eingebracht sind, dass dann, wenn mehrere Basiskörper (32, 33) deckungsgleich hintereinander positioniert sind, die Durchführungen (34, 35) derselben nicht deckungsgleich zueinander ausgerichtet sind, sodass die Durchführungen (34, 25) die Führungskanäle (31) mit der gewellten Kontur bilden.

8. Abfangvorrichtung nach Anspruch 7, **dadurch gekennzeichnet, dass** jeweils abwechselnd hintereinander erste plattenförmige Basiskörper (32) und zweite plattenförmige Basiskörper (33) positioniert sind, wobei sowohl in die ersten Basiskörper (32) als auch in die zweiten Basiskörper (33) Durchführungen (34, 35) mit vorzugsweise gleichem Durchmesser eingebracht sind, und zwar derart, dass dann, wenn die ersten und zweiten plattenförmigen Basiskörper (32, 33) hintereinander positioniert sind, Mittelpunkte (36, 37) von Durchführungen (34, 35) der ersten und zweiten plattenförmigen Basiskörper (32, 33), die jeweils ein Führungskanal (31) definieren, zueinander versetzt sind.

9. Abfangvorrichtung nach Anspruch 8, **dadurch gekennzeichnet, dass** die Mittelpunkte (36) der Durchführungen (34) der ersten plattenförmigen Basiskörper (32) und die Mittelpunkte (37) der Durchführungen (35) der zweiten plattenförmigen Basiskörper (33) jeweils auf einer Kreisbahn (38, 39) angeordnet sind, wobei die Durchführungen (34, 35) der ersten und zweiten plattenförmigen Basiskörper (32, 33) gleiche Durchmesser aufweisen, wobei jedoch die Kreisbahnen (38, 39) der ersten und zweiten plattenförmigen Basiskörper (32, 33) unterschiedliche Durchmesser aufweisen.

10. Abfangvorrichtung nach Anspruch 8, **dadurch gekennzeichnet, dass** die Mittelpunkte der Durchführungen der ersten plattenförmigen Basiskörper und die Mittelpunkte der Durchführungen der zweiten plattenförmigen Basiskörper jeweils auf einer Kreisbahn angeordnet sind, wobei die Durchführungen der ersten und zweiten plattenförmigen Basiskörper gleiche Durchmesser aufweisen, wobei die Kreisbahnen der ersten und zweiten plattenförmigen Basiskörper gleiche Durchmesser aufweisen, und wobei die Mittelpunkte der Durchführungen auf den plattenförmigen Basiskörpern winkelversetzt zueinander angeordnet sind.

11. Abfangvorrichtung nach einem oder mehreren der Ansprüche 7 bis 10, **dadurch gekennzeichnet, dass** jeder Führungskanal (31) der Führung und Abfangung jeweils eines Lichtwellenleiter führenden Elements dient.

12. Abfangvorrichtung nach einem oder mehreren der Ansprüche 1 bis 11, **dadurch gekennzeichnet, dass** jeder Führungskanal (25; 31) derart wellenartig konturiert ist, dass sich in axialer Projektion gesehen das effektive Innenmaß der Führungskanäle mehrfach zwischen 5% und 25% einengt.
